# EUROPEAN PATENT SPECIFICATION

(11) **EP 0 354 259 B1**
(45) Date of publication and mention of the grant of the patent: **23.02.1994**
(21) Application number: 88113011.6
(22) Date of filing: 10.08.1988
(51) Int. Cl.: B01D 53/04, C01B 13/02

(54) **Improved pressure swing adsorption process**
Druckwechseladsorptionsverfahren
Procédé d'adsorption par pression alternée

(43) Date of publication of application: 14.02.1990
(73) Proprietor: PRAXAIR TECHNOLOGY, INC., Danbury, CT 06810-5113 (US)
(72) Inventor: Lagree, Dale Arnold, Williamsville (14221) N.Y. (US); Leavitt, Frederick Wells, North Tonawanda (14120) N.Y. (US)
(74) Representative: Schwan, Gerhard, Dipl.-Ing.

(56) References cited:
- EP-A- 0 147 277
- EP-A- 0 166 013
- EP-A- 0 248 922
- WO-A-87/05529

## Description

- The invention relates to the separation of a feed gas mixture containing less readily and more readily adsorbable components. More particularly, it relates to such gas separation using pressure swing adsorption processing.

- In numerous chemical processing, refinery, metal production and other industrial applications, high purity gas streams are frequently employed for a variety of purposes. For example, high purity oxygen is used in various industries, such as chemical processing, steel mills, paper mills, and in lead and glass production operations. Many such applications require purities in the range of about 90-93% oxygen at flow rates of up to about 2800 m3 (100,000 cubic feet) per hour or more. Oxygen and nitrogen can, of course, be obtained by various known techniques for air separation. Pressure swing adsorption (PSA) processing is particularly suited for such air separation in a variety of applications, particularly in relatively small sized operations for which the use of a cryogenic air separation plant may not be economically feasible.

In the PSA process, a feed gas mixture containing a more readily adsorbable component and a less readily adsorbable component are commonly passed to an adsorbent bed capable of selectively adsorbing the more readily adsorbable component at a higher adsorption pressure. The bed is thereafter depressurized to a lower desorption pressure for desorption of the more readily adsorbable component and its removal from the bed prior to the introduction of additional quantities of the feed gas mixture to the bed as cyclic adsorption-desorption operations are continued in the bed. Such PSA processing is commonly carried out in multi-bed systems, with each bed employing the PSA processing sequence on a cyclic basis interrelated to the carrying out of such processing sequence in the other beds of the adsorption system. In PSA systems designed for the recovery of high purity oxygen product as the less readily adsorbable component of air, each adsorbent bed will commonly contain an adsorbent material capable of selectively adsorbing nitrogen as the more readily adsorbable component, with said nitrogen being subsequently desorbed and removed from the bed upon reduction of the pressure of the bed from the higher adsorption pressure level to a lower desorption pressure.

In PSA-oxygen and other such processing, it is desirable to minimize design, fabrication, transportation and equipment costs in order to achieve lower capital costs and increased reliability. Such objectives are best achieved through the use of PSA processes and systems that minimize the number and size of operating components, such as the adsorbent inventory, adsorbent vessels, related tanks, valves, compression equipment, process lines and the like. The costs associated with the operation of PSA systems are minimized by the use of processes that require low power per unit of product produced. Such processes exhibit high recovery of oxygen from the feed air while enabling low compression ratios to be employed in the compression equipment.

Various processing approaches have been developed for applying the PSA technology in air separation operations for the production of oxygen. In one such approach (US-A-3 738 087), a three bed system is employed in a processing sequence that includes increasing pressure adsorption with product recovery; cocurrent depressurization for product recovery; pressure equalization and provide purge purposes; cocurrent depressurization, purge and repressurization. This process operates at an atmospheric desorption pressure and an upper adsorption pressure on the order of 345 kPa 50 psia. While this approach can be used to effectively recover oxygen by air separation, it is disadvantaged in that (1) operating costs are high because of the relatively high feed compressor ratio required; (2) adsorbent inventory for a given product flow is also relatively high; and (3) the process and associated system is necessarily complex, and packaging problems are also experienced with respect to large size plants.

Another prior art approach which has been used in practical applications involves the use of three adsorbent beds in a processing sequence that involves adsorption, evacuation and repressurization steps. The processing sequence typically operates between essentially atmospheric and vacuum pressure levels, with the three steps being of equal duration. Evacuation or vacuum desorption is carried out at about 20 kPa (2.9 psia), with the regenerated bed being repressurized to about 106 kPa (15.4 psia) for a constant pressure feed, adsorption and oxygen product recovery step at this upper adsorption process level. As this approach is carried out primarily in the subatmospheric pressure region, it requires significantly lower power consumption than in the above atmosphere approach. However, it is found that this power reduction is achieved at the expense of higher adsorbent inventory requirements, which sharply increase the capital costs for the adsorbent material and the containing vessels . Packaging also becomes more difficult in this approach because of the added size requirements of the system.

Another three bed PSA-oxygen system which has been used in practice employs a six step processing sequence that operates between super atmospheric and vacuum pressure levels. The processing steps involved in this approach include (1) bed repressurization from 28 to 90 kPa (4 to 13 psia) with feed air and a portion of the product gas, (2) increasing pressure adsorption with feed air to increase the pressure from 90 to 152 kPa (13 to 22 psia), (3) bed equalization with related pressure reduction from 152 to 93 kPa (22 to 13.5 psia), (4) the supply of purge with a slight further pressure reduction from 93 to 86 kPa (13.5 to 12.5 psia), (5) evacuation from 86 to 48 kPa (12.5 to 7 psia), and (6) bed purge with a pressure reduction from 48 to 28 kPa (7 to 4 psia). While this approach, using steps of about 30 seconds each for a total cycle time of three minutes, endeavors to minimize power consumption by operating primarily under vacuum, it also is found to achieve such benefit at the expense of further processing complexity and additional adsorbent requirements.

In conformity with a further known pressure swing adsorption process (EP-A-0 248 922) for air separation using three adsorbent beds feed air is passed through a first bed to adsorb nitrogen, while a third bed which has completed adsorption is depressurized to a vacuum pressure through the inlet thereof to provide for countercurrent desorption of the bed with the outlet of the third bed being connected to the outlet of a second bed which has completed desorption at the same time as the initial stage of the desorption of the third bed to thereby pass oxygen rich gas from the third, initially higher pressure bed to the second, initially lower pressure bed. The communication between the second and third beds is discontinued before the pressure of the third bed becomes equal to that of the second bed, while continuing the countercurrent desorption of the third bed. Upon disconnection of the outlets of the second and third beds a part of the product oxygen-enriched gas is introduced into the second bed through the outlet thereof.

Furthermore a pressure swing adsorption process for the separation of a feed gas mixture containing a less readily adsorbable component and a more readily adsorbable component in an adsorption system having at least two adsorbent beds capable of selectively adsorbing the more readily adsorbable component, each bed, on a cyclic basis, undergoing a processing sequence comprising:
(a) introducing gas into the product end of the bed following desorption thereof to increase the pressure of the bed from its lower subatmospheric desorption pressure to a lower intermediate pressure level, said gas having been released from another bed in the system initially at a higher pressure;
(b) passing feed gas to the feed end of the bed to increase the pressure thereof from the lower intermediate pressure level to the higher adsorption pressure of the bed, and discharging less readily adsorbable component from the product end of the bed as product gas;
(c) cocurrently depressurizing the bed from the higher adsorption pressure to an intermediate pressure by the release of void space gas from the product end thereof, the released gas being passed to the product end of another bed in the system initially at a lower pressure, the purity of the void space gas degrading in the less readily adsorbable component upon completion of the cocurrent depressurization step;
(d) countercurrently depressurizing the bed with release of the more readily adsorbable component from the feed end of the bed, the pressure of the bed being reduced from the intermediate pressure level to the lower subatmospheric desorption pressure; and
(e) repeating steps (a) - (d) on a cyclic basis with additional feed gas being passed to the bed during step (b), is known from introductory part of the description of WO-A-8 705 529 which refers to the disclosure of US-A-3 738 087 and US-A-3 430 418.

From the above, it would be appreciated that the use of pressure swing adsorption technology to produce oxygen from air is well known, and that a variety of combinations of different process steps have been employed for such purpose. Thus, such steps as bed equalization, air and/or product repressurization, increasing pressure adsorption with product recovery, constant pressure adsorption, bed depressurization, evacuation and low pressure purge are employed in various process arrangements. There nevertheless remains in the art a need to develop an improved PSA processing approach, particularly for the recovery of high purity oxygen by air separation. In particular, it is desired to employ a PSA process and system having reduced overall costs as compared to the presently available approaches, one capable of providing processing simplicity, lower capital costs, and reduced size requirements, together with improved packaging characteristics.

It is an object of the invention, therefore, to provide an improved PSA process.

It is another object of the invention to provide an improved PSA process for the recovery of high purity oxygen by air separation.

It is another object of the invention to provide a PSA process having advantageously low capital costs with power consumption similar to, or better than, that of other commercial PSA approaches.

In conformity with the present invention a pressure swing adsorption process for the separation of a feed gas mixture containing a less readily adsorbable component and a more readily adsorbable component in an adsorption system having at least two adsorbent beds capable of selectively adsorbing said more readily adsorbable component, each bed, on a cyclic basis, undergoing a processing sequence comprising:
(a) introducing gas into the product end of the bed following desorption thereof to increase the pressure of the bed from its lower subatmospheric desorption pressure to a lower intermediate pressure level, said gas having been released from another bed in the system initially at a higher pressure;
(b) passing feed gas to the feed end of the bed to increase the pressure thereof from said lower intermediate pressure level to the higher adsorption pressure of the bed, and discharging less readily adsorbable component from the product end of the bed as product gas;
(c) cocurrently depressurizing the bed from said higher adsorption pressure to an intermediate pressure by the release of void space gas from the product end thereof, said released gas being passed to the product end of another bed in the system initially at a lower pressure, the purity of the void space gas degrading in the less readily adsorbable component upon completion of said cocurrent depressurization step;
(d) countercurrently depressurizing the bed with release of the more readily adsorbable component from the feed end of the bed, the pressure of the bed being reduced from the intermediate pressure level to said lower subatmospheric desorption pressure; and
(e) repeating steps (a) - (d) on a cyclic basis with additional feed gas being passed to the bed during step (b),
is characterized in that in steps (a) and (c) said passage of gas is continued for a period of time such as to partially, but not fully, equalize the pressure between said beds.

A high purity product, such as high purity oxygen product upon air separation, is conveniently and economically recovered from the feed gas in the practice of the invention.

The objects of the invention are accomplished by the use of a PSA process that operates between a lower, subatmospheric desorption pressure and a higher above atmospheric adsorption pressure and that incorporates a simple but unique combination of processing steps. Such steps and such operating conditions enable a desired gas separation operation to be carried out in a simple, low capital cost manner, with the size of the adsorbent beds employed being advantageously small, providing enhanced packaging characteristics as compared to prior art systems. Power consumption is desirably low so as to be similar to, or better than, prior art systems employing vacuum desorption conditions.

The invention is described herein with particular reference to the separation of air into oxygen-rich and nitrogen enriched streams. It will be appreciated, however, that the process of the invention can be employed with respect to other feed gas mixtures, from any source, wherein one component thereof comprises a less readily adsorbable component and another component comprises a more readily adsorbable component of the gas mixture. The adsorbent or adsorbents employed will of course, be capable of selectively adsorbing the more readily adsorbable component, while the less readily adsorbable component preferentially passes through the bed of said adsorbent and is recovered from the product end of the bed.

In a preferred embodiment of the invention, the processing sequence involves the five process steps, including purge, referred to in the Summary above, with the feed gas repressurization advantageously subdivided into separate repressurization and increasing pressure adsorption steps, and combined with a constant pressure adsorption step. Each bed in the adsorption system, on a cyclic basis, undergoes a processing sequence comprising the novel combination of processing steps as herein described and claimed.

The invention is carried out, in preferred embodiments thereof, in two bed systems in which the feed gas is passed to each bed, in turn, and in which the processing sequence is carried out in each bed so that the cocurrent depressurization-pressure equalization step in one bed coincides with the partial repressurization-pressure equalization step of the other bed. As indicated in further detail below, however, it should be noted that the invention is not limited to its preferred two-bed embodiment, but may be carried out in three or more bed systems although such operations are generally less desirable than the practice of the invention in said two-bed system.

Commencing with a bed at its lower subatmospheric desorption pressure following evacuation and purge, the processing sequence of a preferred embodiment of the invention begins with a partial pressure equalization step in which gas is introduced into the bed to increase the pressure thereof from said lower description pressure to a lower intermediate pressure level. The gas so introduced comprises gas released from the product end of another bed in the adsorption system, said bed being initially at a higher pressure, e.g., the upper adsorption pressure level of the system. The passage of gas from one bed to another is continued for a period of time such as to partially, but not fully, equalize the pressure between the beds, as discussed further below. Following such partial pressure equalization, the bed undergoing repressurization is further repressurized with feed gas in two separate processing steps.

In the first repressurization step using feed gas, the feed gas is passed to the feed end of the bed, with no release of gas from the opposite, or product end of the bed. Thus the introduction of feed gas causes the pressure of the bed to increase from the lower intermediate pressure level reached during partial pressure equalization to an upper intermediate pressure level. This repressurization step is followed by an increasing pressure adsorption step to further increase the pressure from said upper intermediate pressure level to its higher adsorption pressure. Additional feed gas is passed to the feed end of the bed for such further repressurization purposes, while less readily adsorbable component is simultaneously being discharged from the product end of the bed, typically as product gas. The rate of addition of feed gas to the bed, the rate of adsorption of the more readily adsorbable component thereof in the bed, and the rate of discharge of the less readily adsorbable component are adjusted, as is known in the art, so that the pressure level in the bed continues to build up while less readily adsorbable component is being discharged from the product end of the bed.

Following completion of the repressurization of the bed to its high adsorption pressure, the passage of feed gas to the feed end of the bed is continued at this pressure in a so-called constant pressure adsorption step. During this step of the preferred embodiment herein described, the more readily adsorbable component is adsorbed during its passage through the bed, while additional quantities of the less readily adsorbable component are simultaneously discharged from the product end of the bed as additional product gas.

Following product gas recovery as indicated above, the passage of feed gas to the bed is discontinued, and the bed is cocurrently depressurized from the higher adsorption pressure to an intermediate pressure by the release of gas from the product end of the bed. The released gas is passed to the product end of another bed in the system initially at a lower pressure, e.g., the bed at its lower desorption pressure as referred to above. The passage of cocurrent depressurization to the other bed for pressure equalization purpose is continued for a period of time such as to partially, but not fully, equalize the pressure between the beds. The purity of the void space gas will be found to degrade with respect to the less readily adsorbable component upon completion of the cocurrent depressurization step.

The preferred embodiment being described herein continues with the countercurrent depressurization of the bed from its intermediate pressure level to a lower subatmospheric desorption pressure. During this step, the more readily adsorbable component that had become adsorbed during the previous feed introduction steps becomes desorbed and is released from the feed end of the bed. No feed gas is passed to the bed during this countercurrent depressurization step, or during the preceeding cocurrent depressurization step. The countercurrent depressurization step of the invention will be understood to comprise an evacuation step, carried out using a suitable vacuum pump or other vacuum generating means, with the pressure in the bed being reduced from its intermediate pressure level to the lower subatmospheric desorption pressure of the system. In order to more completely remove more readily adsorbable component from the bed and thus to more fully regenerate the bed prior to commencing the repressurization steps referred to above, the bed is preferably purged, following said evacuation step, to remove additional quantities of the more readily adsorbable component previously adsorbed and/or present in inter particle voids from the feed end thereof. Such purging is accomplished by the passage of a portion of the less readily adsorbable component released from the product end of a bed in the system to the product end of the bed as purge gas, the bed being essentially at its lower subatmospheric desorption pressure during the purge step.

Following completion of the purge step, the processing sequence referred to above is repeated, on a cyclic basis, with additional quantities of feed gas being passed to the bed during the partial repressurization, increasing pressure adsorption and constant pressure adsorption steps. A higher purity product gas comprising the less readily adsorbable component of the feed gas is conveniently and economically obtained in the practice of the invention. It should be noted that, while the purge step referred to above is employed in the preferred embodiment of the invention to improve the efficiency and capacity of the adsorbent, it is also possible to carry out the processing sequence and achieve the desired product purity without incorporation of the purge step in the processing sequence. If a very deep vacuum is employed, for example, it may be convenient to leave out the purge step. In general, however, the purge step, although not essential, will be understood to be highly desirable as it increases the adsorption capacity and the differential loading capacity of the adsorbent bed as used in the cyclic process of the invention.

The cocurrent depressurization-pressure equalization step of the invention, as noted above, is not carried out fully as in conventional pressure swing adsorption processing in which such a step is commonly employed. Rather, it is carried out specifically as a partial, rather than full, pressure equalization. For this purpose, the cocurrent depressurization pressure equalization step is completed with the difference in pressure between the bed being repressurized and the bed being depressurized generally being from about 6.9 to about 69 kPa (about 1 to about 10 psi) or more. Said pressure difference is preferably in the range of from about 13.8 to about 62.1 kPa (about 2 to about 9 psi), more preferably from about 20.7 to about 34.5 kPa (about 3 to about 5 psi). By contrast, the full pressure equalization employed in the art might nevertheless have some slight pressure difference, due to the practical operating characteristics of associated valves or like equipment, such as a difference of up to about 3.45 kPa (0.5 psi). The partial pressure equalization of the invention, however, will be seen as not constituting such a minor, incidental variation from full pressure equalization, but a planned and deliberate cessation of the pressure equalization step prior to the essential completion of the full pressure equalization between the beds. Such partial pressure equalization is found, in the practice of the invention, to advantageously reduce the adsorbent requirements of the gas separation operation without, in preferred embodiments of the invention, any significant loss in recovery of the less readily adsorbable component product gas.

As noted above, the invention provides a particularly advantageous process for the recovery of oxygen from air, the desired oxygen product comprising the less readily adsorbable component of feed air, and nitrogen comprising the more readily adsorbable component thereof. In a generally preferred two-bed adsorption system, the practice of the invention can be illustrated by the Table below:

**Table I**

| Bed No. | Cycle | | | | | | | |
|---|---|---|---|---|---|---|---|---|
| 1 | E↑ | R | I.P.A. | A | E↓ | EVAC. | EVAC. | P |
| 2 | E↓ | EVAC. | EVAC. | P | E↑ | R | I.P.A. | A |

In this Table, E represents a cocurrent depressurization-partial pressure equalization step between a bed that has completed a constant pressure adorption step at upper adsorption pressure and a bed that has been purged at the lower subatmospheric desorption pressure; R represents repressurization from the lower intermediate pressure reached during partial pressure equalization to an upper intermediate pressure by the passage of feed air to the feed end of the bed; I.P.A. represents an increasing pressure adsorption step on which feed air is passed to the feed end of the bed and oxygen is withdrawn from the product end thereof, with the pressure in the bed increasing from the upper intermediate pressure to the higher adsorption pressure; A represents a constant pressure adsorption step at higher adsorption pressure with feed air being introduced to the feed end of the bed and oxygen; i.e., the less readily adsorbable component being discharged from the product end thereof; EVAC. represents the countercurrent depressurization of the bed under vacuum, with the release of nitrogen, i.e., the more readily adsorbable component, from the feed end of the bed, whereby the pressure of the bed is reduced from the intermediate pressure level reached during partial pressure equalization to the lower subatmospheric desorption pressure; and P represents purge of the bed essentially at said lower desorption pressure with a portion of the product oxygen gas recovered from the system. In a practical example of the practice of the invention in the two-bed adsorption system illustrated in the cycle chart of the Table, bed 1 is initially at a lower subatmospheric pressure of 24 kPa (3.5 psia), following purge, and is partially repressurized by gas passed from bed 2 in step E, whereby the pressure of said bed is increased to 81 kPa (11.8 psi), said step E comprising 9 seconds. In step R, also carried out over a 9 second period, bed is repressurized with feed air to 101 kPa (14.7 psia) . Step I.P.A. is carried out for 20 seconds, during which time feed air is passed to the bed and product oxygen is withdrawn therefrom, with the pressure in the bed increasing to 148 kPa (21.5 psia), approximately the higher adsorption pressure level. The passage of feed air to bed 1 is continued during step A for a period of 7 seconds, during which the pressure in the bed stabilized at a higher adsorption pressure of 155 kPa (22.5 psia). Bed 1 then begins the depressurization phase of the overall cycle with cocurrent depressurization-partial pressure equalization step E, carried out for the same 9 second period as during the repressurization of said bed 1. During the partial pressure equalization step, the pressure in the bed is decreased from said 155 kPa (22.5 psia) to 95 kPa (13.8 psia), as contrasted to the 81 kPa (11.8 psia) reached upon repressurization by said partial pressure equalization step. Thus, the partial pressure equalization step of the invention is terminated with a pressure difference of 14 kPa (2 psi) between the beds in this illustrative example. The evacuation step is carried out over a period of 29 seconds, with the initial 9 seconds thereof corresponding to step R in bed 2 and the remaining 20 seconds corresponding to the I.P.A. step in said bed 2. During the first portion of the EVAC. step in bed 1, the pressure in bed 1 is reduced from 95 kPa (13.8 psia) to 68 kPa (9.8 psia), with said pressure being further reduced to about 26 kPa (3.7 psia) over the course of the remaining 20 seconds of the EVAC. step in bed 1. The bed is then purged with oxygen product gas for 7 seconds, during which time the pressure in bed 1 reaches its lower desorption pressure level of 24 kPa (3.5 psia).

It will be seen in the illustration in the Table that bed 2 undergoes the same processing sequence as bed 1 for the same individual step times and for the same overall cycle time, i.e., 90 seconds. While bed 1 undergoes repressurization and constant pressure adsorption, bed 2 undergoes depressurization and purge, and vice versa as continuous operations are carried out in the adsorption system and each bed repeats the processing sequence with additional feed air being passed to the system during steps R, I.P.A., and A.

The cocurrent depressurization-partial pressure equalization step, i.e., step E, will be seen to have resulted, in the illustrative example, in a final pressure below atmospheric pressure, i.e., 95 kPa (13.8 psia) for the bed being depressurized. In the example and in other applications of the invention, this pressure condition is advantageous in that the subsequent evacuation step is less energy intensive as a result, since the bed is already reduced to vacuum conditions by said step E. It should also be noted that the pressurization of a vessel with oxygen gas, or other less readily adsorbable component, removed from the other vessel, i.e., in step E, serves to retain this oxygen in the product improving the efficiency of the system. Without such partial pressure equalization step, the oxygen present as void space gas would be lost in the subsequent depressurization step. The partial pressure equalization step also serves to raise the average adsorption pressure of the process, thereby increasing the capacity of the adsorbent. In practice, the partial pressure equalization step is generally continued until the void space gas released upon cocurrent depressurization of the depressurizing bed degrades in oxygen purity, with the pressure difference between the equalizing beds being as indicated above and often with the pressure of the partially equalized beds being below atmospheric pressure. Such partial pressure equalization in the novel process of the invention is found to decrease the adsorbent requirements of the system, as noted above, and although oxygen recovery is generally decreased, the flow and pressure levels employed are such that a decrease in power consumption is generally realized.

Those skilled in the art will appreciate that, although the two-bed system described above is preferred for the highly desirable air separation for oxygen recovery application referred to above, other applications or conditions may suggest the use of the invention in systems having more than two beds. Thus, the processing sequence described above and illustrated in the Table can be employed in a three-bed system. In such an embodiment, the bed undergoing repressurization by partial pressure equalization will receive gas released from the second highest numbered bed in the system. Thus, bed 1 will receive gas released from bed 3, bed 2 will receive gas from the fourth bed, i.e. bed 1 in the cyclic three-bed system, and bed 3 will receive gas from the fifth bed, i.e. bed 2 in said cyclic system. In other embodiments falling within the overall scope of the invention, such three-bed operation may be carried out, less desirably, in processing sequences involving partial pressure equalization, increasing pressure adsorption, evacuation and purge, with the processing cycle also including a period of time in which each bed is in isolation, either following evacuation and purge or following adsorption, before commencing the next repressurization or depressurization phase of the overall cycle.

The feed air introduction for bed repressurization may commence when the adsorbent vessel begins to receive equalization gas. In this case, the vessel is repressurized simultaneously at both ends, with pressure equalization gas being added at the product end of the vessel and bed, and with feed air being introduced to the feed end thereof. This serves to maximize the utilization of the feed compressor, but also tends to lower oxygen or other product recovery because less gas is transferred from the bed equalizing down in pressure.

It is also within the scope of the invention, following repressurization of a bed by partial pressure equalization, to further repressurize the bed to increase the pressure from the lower intermediate pressure reached during partial pressure equalization to the higher adsorption pressure of the bed, with or without the passage of additional feed gas to the feed end of the bed in a constant pressure adsorption step at said higher adsorption pressure. In such embodiments, the bed is thereafter cocurrently depressurized to an intermediate pressure in a cocurrent depressurization-partial pressure equalization step, and is thereafter countercurrently depressurized, with release of the more readily adsorbable component e.g. nitrogen, from the feed end of the bed as waste or by-product material, with the pressure reaching the lower subatmospheric pressure level, with or without purge, all as described above with respect to the prepared embodiments of the invention. In one such embodiment, the feed gas is passed to the feed end of the bed to increase the pressure from the lower intermediate pressure bed to the higher adsorption pressure in a pressurization step corresponding to step R of the Table. Thus, such repressurization with feed gas is carried out without the discharge of oxygen or other less readily adsorbable component from the product end of the bed during repressurization. No increasing pressure adsorption step is employed, therefore, in this embodiment. However, additional air or other feed gas is passed to the feed end of the bed at the higher adsorption pressure, in a constant pressure adsorption step, with discharge of oxygen or other less readily adsorbable component from the product end of the bed as product gas. In another embodiment of the invention, no initial feed gas repressurization is employed, but the increasing pressure adsorption step above is used to increase the pressure from the lower intermediate pressure level to the higher adsorption pressure. Thus, oxygen or other less readily adsorbable component is discharged from the product end of the bed as product gas simultaneously with the addition of feed gas to the feed end of the bed. In certain applications in which such repressurization from the lower intermediate pressure level is accomplished solely by the increasing pressure adsorption step, without a prior feed gas repressurization step, the constant pressure adsorption step may be omitted from the overall processing sequence since the desired production of product gas can be accomplished during said increasing pressure adsorption step. All of such processing alternatives can otherwise be carried out as described above with respect to the processing steps of the preferred embodiments of the invention. A purge step following evacuation to the lower subatmospheric desorption pressure is generally desirable.

It will be appreciated that in the preferred embodiment illustrated in Table I and in other embodiments, feed gas is not passed through the feed gas compressor during the partial pressure equalization step, nor does it pass through the vacuum pump used for evacuation purposes during this step. Accordingly, a compressor vent valve and a vacuum suction valve are provided, said valves being open during the partial pressure equalization step so that the feed compressor and the vacuum pump are not dead-ended during this period. It should also be noted that, if desired, the air or other feed gas to the adsorption system may be pre-dried. The particular drying arrangement does not, however, form a part of the PSA process of the invention. If the feed gas is not pre-dried, the front end of the adsorbent bed acts as a drying zone and does not essentially contribute to the principal gas separation per se. In such a case, the effective separation zone is, therefore, somewhat shorter than the overall bed length. The drying zone, in any event, generally comprises less than 50% of the total bed length.

In the practice of the invention, the adsorbent material used in the adsorbent bed can be any suitable, available adsorbent capable of selectively adsorbing a more readily adsorbable component from a feed gas mixture containing said component and a less readily adsorbable component. In the air separation application in which it is desired to recover oxygen as the less readily adsorbable component, a variety of commercially available adsorbents exhibiting a selectivity for the adsorption of nitrogen as the more readily adsorbable component of air may be employed. For example, well known molecular sieves, such as 5A and 13X material, may conveniently be employed. When the feed gas is not pre-dried, the adsorbent used in the drying zone referred to above may be any adsorbent exhibiting water selectivity. Said 5A and 13X molecular sieves, silica and alumina are representative examples of such materials. It will be appreciated, therefore, that the adsorbent bed may be a composite, i.e. a bed employing more than one type of adsorbent. In the interest of system simplicity, however, the bed is preferably composed of a single type of adsorbent. Those skilled in the art will also appreciate that the performance levels achieved in the practice of the invention will be affected by the adsorption characteristics of the particular adsorbent employed, with improved adsorbents obviously contributing to the benefits of the invention.

It is generally desirable to include a product gas purge tank in the adsorption system used for the practice of the invention. During the increasing pressure adsorption step, product gas, e.g. oxygen, is conveniently passed into such a product purge tank maintained conveniently at a pressure slightly above ambient. During the latter portion of said increasing pressure adsorption step, it is found convenient to use a portion of the product gas withdrawn from the bed as purge gas for the second adsorbent bed, or for another bed in a system having more than two beds. The product purge tank also desirably receives a small portion of the product gas being passed from one bed to another during the partial pressure equalization step. Such portion of gas will travel through suitable check valve and will be controlled by the pressure in said purge tank. If desired, the check valve may be replaced by a back pressure regulator, in which case product gas would be delivered to the product gas discharge line and to the product purge tank only at the higher adsorption pressure level and not during the partial pressure equalization step. In this latter case, the overall performance of the system will remain similar to other embodiments, although the average product pressure will rise, and product flow from the system will become more intermittent.

In the practice of the illustrated embodiment of the Table, two adsorbent beds 1.8 m (6 feet) long and 51 mm (2 inches) in diameter were loaded with 2.6 kg (5.7 pounds) of molecular sieve supplied by Union Carbide Corporation. As noted above, the operating pressure varied from 24 kPa (3.5 psia) for the purge step to 155 kPa (22.5 psia) at the end of the adsorption step. With the indicated total cycle time of 1.5 minutes, the system was able to produce oxygen of 90.1% purity. The amount of oxygen recovered from the feed air was 56%.

The operating conditions employed in the practice of the preferred embodiment of the invention, and in various processing alternatives, will be seen to be convenient and flexible. The constraints associated with any particular end user application, e.g. product pressure, power consumption, product purity and the like, can be readily accommodated such that the overall cost of producing oxygen can be minimized. The process of the invention thus enables high purity oxygen to be conveniently produced with minimum adsorbent inventory requirements, process complexity and associated system components. Operating costs are desirably low because of the relatively low compression ratios that can be employed, and the oxygen or other product recovery levels obtainable in the practice of the invention. For all of these reasons, the invention represents a significant advance in the PSA art, particularly with respect to the desirable production of high purity oxygen in an economical vacuum cycle process.

## Claims

1. A pressure swing adsorption process for the separation of a feed gas mixture containing a less readily adsorbable component and a more readily adsorbable component in an adsorption system having at least two adsorbent beds capable of selectively adsorbing said more readily adsorbable component, each bed, on a cyclic basis, undergoing a processing sequence comprising:
(a) introducing gas into the product end of the bed following desorption thereof to increase the pressure of the bed from its lower subatmospheric desorption pressure to a lower intermediate pressure level, said gas having been released from another bed in the system initially at a higher pressure;
(b) passing feed gas to the feed end of the bed to increase the pressure thereof from said lower intermediate pressure level to the higher adsorption pressure of the bed, and discharging less readily adsorbable component from the product end of the bed as product gas;
(c) cocurrently depressurizing the bed from said higher adsorption pressure to an intermediate pressure by the release of void space gas from the product end thereof, said released gas being passed to the product end of another bed in the system initially at a lower pressure, the purity of the void space gas degrading in the less readily adsorbable component upon completion of said cocurrent depressurization step;
(d) countercurrently depressurizing the bed with release of the more readily adsorbable component from the feed end of the bed, the pressure of the bed being reduced from the intermediate pressure level to said lower subatmospheric desorption pressure; and
(e) repeating steps (a) - (d) on a cyclic basis with additional feed gas being passed to the bed during step (b),
characterized in that in steps (a) and (c) said passage of gas is continued for a period of time such as to partially, but not fully, equalize the pressure between said beds.

2. The process of claim 1 in which during step (b), upon the pressure of the bed having been increased from said lower intermediate pressure level to the higher adsorption pressure of the bed, additional feed gas is passed to the feed end of the bed at said higher adsorption pressure while less readily adsorbable component is continued to be discharged from the product end of the bed as product gas.

3. The process of claim 1 or 2 and including purging the bed following step (d) to remove additional quantities of the more readily adsorbable component from the feed end thereof, by the passage of a portion of the less readily adsorbable component released from the product end of a bed in the system to the product end of said bed as purge gas at said lower desorption pressure.

4. The process of claim 1 in which the passing of feed gas to the feed end of the bed in step (b) is carried out simultaneously with the introducing of gas to the product end of the bed in step (a).

5. The process of claim 1 and including discharging less readily adsorbable component from the product end of the bed as product gas simultaneously with the addition of feed gas to the feed end of the bed, the rate of addition, discharge and adsorption in the bed being such as to enable the pressure of the bed to increase to said higher adsorption pressure.

6. The process of claim 1 in which the passing of feed gas to the feed end of the bed in step (b), is carried out without the discharge of less readily adsorbable component from the product end of the bed during said repressurization, and including, prior to step (c), passing additional feed gas to the feed end of the bed at the higher adsorption pressure, and discharging less readily adsorbable component from the product end of the bed as product gas.

7. The process of claim 1 wherein step (b) comprises:
(b1) passing feed gas to the feed end of the bed to increase the pressure thereof from said lower intermediate pressure level to an upper intermediate pressure level;
(b2) passing additional feed gas to the feed end of the bed so as to repressurize the bed from said upper intermediate pressure level to its higher adsorption pressure, while simultaneously discharging less readily adsorbable component from the product end of the bed as product gas;
(b3) passing additional feed gas to the feed end of the bed at the higher adsorption pressure, while simultaneously discharging additional less readily adsorbable component from the product end of the bed as additional product gas.

8. The process of claim 1 in which said adsorption system contains two adsorbent beds.

9. The process of claim 3 in which said adsorption system comprises three adsorbent beds.

10. The process of any one of the preceding claims in which the feed gas mixture comprises air, the less readily adsorbable component comprises oxygen, and said more readily adsorbable component comprises nitrogen.

11. The process of any one of the preceding claims in which the difference in pressure between said beds upon the completion of said partial pressure equalization is from about 6.0 to 69 kPa (about 1 to about 10 psi).

12. The process of claim 11 in which said pressure difference is from about 14 to about 62 kPa (about 2 to about 9 psi).

13. The process of claim 12 in which said pressure difference is from about 21 to about 34 kPa (about 3 to about 5 psi).

## Patentansprüche

1. Druckwechseladsorptionsverfahren zum Trennen eines eine weniger leicht adsorbierbare Komponente und eine leichter adsorbierbare Komponente enthaltenden Einsatzgasgemischs in einem Adsorptionssystem, das mindestens zwei Adsorberbetten aufweist, welche die leicht adsorbierbare Komponente selektiv adsorbieren können, wobei jedes Bett zyklisch eine Prozeßabfolge durchläuft, bei der:
(a) Gas in das Produktende des Bettes im Anschluß an dessen Desorption eingeleitet wird, um den Druck des Bettes von seinem niedrigeren, unter dem Atmosphärendruck liegenden Desorptionsdruck auf einen niedrigeren Zwischendruckwert zu steigern, wobei das Gas von einem anderen Bett in dem System freigesetzt wird, das sich anfänglich auf einem höheren Druck befindet;
(b) dem Einsatzende des Bettes Einsatzgas zugeführt wird, um den Druck des Bettes von dem niedrigeren Zwischendruckwert auf den höheren Adsorptionsdruck des Bettes zu steigern, und weniger leicht adsorbierbare Komponente von dem Produktende des Bettes als Produktgas abgegeben wird;
(c) das Bett im Gleichstrom von dem höheren Adsorptionsdruck auf einen Zwischendruck entspannt wird, indem Lückenvolumengas von dem Produktende des Bettes freigesetzt wird, wobei das freigesetzte Gas zu dem Produktende eines anfänglich auf einem niedrigeren Druck befindlichen anderen Bettes in dem System übergeleitet wird, wobei die Reinheit des Lückenvolumengases an der weniger leicht adsorbierbaren Komponente nach Abschluß dieses Gleichstromdruckminderungsschrittes abnimmt;
(d) das Bett im Gegenstrom entspannt wird, wobei die leichter adsorbierbare Komponente von dem Einsatzende des Bettes freigesetzt wird und der Druck des Bettes von dem Zwischendruckwert auf den niedrigeren, unter dem Atmosphärendruck liegenden Desorptionsdruck gesenkt wird; und
(e) die Verfahrensschritte (a) bis (d) zyklisch wiederholt werden, wobei dem Bett während des Verfahrensschrittes (b) zusätzliches Einsatzgas zugeleitet wird,
dadurch gekennzeichnet, daß in den Verfahrensschritten (a) und (c) das Überleiten von Gas für eine solche Zeitdauer fortgesetzt wird, daß es zu einem teilweisen, nicht aber vollen, Druckausgleich zwischen den Betten kommt.

2. Verfahren nach Anspruch 1, bei dem während des Verfahrensschrittes (b), nachdem der Druck des Bettes von dem niedrigeren Zwischendruckwert auf den höheren Adsorptionsdruck des Bettes gesteigert wurde, zusätzliches Einsatzgas dem Einsatzende des Bettes bei dem höheren Adsorptionsdruck zugeleitet wird, während weniger leicht adsorbierbare Komponente weiterhin von dem Produktende des Bettes als Produktgas abgegeben wird.

3. Verfahren nach Anspruch 1 oder 2, bei dem das Bett im Anschluß an den Verfahrensschritt (d) gespült wird, um zusätzliche Mengen der leichter adsorbierbaren Komponente von dem Einsatzende des Bettes abzufuhren, indem ein Teil der von dem Produktende eines Bettes in dem System freigesetzten leichter adsorbierbaren Komponente dem Produktende des Bettes als Spülgas bei dem niedrigeren Desorptionsdruck zugeleitet wird.

4. Verfahren nach Anspruch 1, bei dem das Überleiten des Einsatzgases zu dem Einsatzende des Bettes im Verfahrensschritt (b) gleichzeitig mit dem Einleiten von Gas in das Produktende des Bettes im Schritt (a) erfolgt.

5. Verfahren nach Anspruch 1, bei dem weniger leicht adsorbierbare Komponente von dem Produktende des Bettes als Produktgas gleichzeitig mit dem Zuleiten von Einsatzgas zu dem Einsatzende des Bettes abgegeben wird, wobei die Zufuhrrate, die Abgaberate und die Adsorptionsrate in dem Bett so gewählt sind, daß der Druck des Bettes auf den höheren Adsorptionsdruck ansteigen kann.

6. Verfahren nach Anspruch 1, bei dem das Zuführen von Einsatzgas zu dem Einsatzende des Bettes im Verfahrensschritt (b) ausgeführt wird, ohne daß weniger leicht adsorbierbare Komponente von dem Produktende des Bettes während dieses Wiederaufdrückens abgegeben wird, und vor dem Verfahrensschritt (c) dem Einsatzende des Bettes zusätzliches Einsatzgas bei dem höheren Adsorptionsdruck zugeführt wird und weniger leicht adsorbierbare Komponente von dem Produktende des Bettes als Produktgas abgegeben wird.

7. Verfahren nach Anspruch 1, bei dem der Verfahrensschritt (b) umfaßt:
(b1) Zuführen von Einsatzgas zu dem Einsatzende des Bettes, um den Druck des Bettes von dem niedrigeren Zwischendruckwert auf einen höheren Zwischendruckwert zu steigern;
(b2) Zuführen von zusätzlichem Einsatzgas zu dem Einsatzende des Bettes, um das Bett von dem oberen Zwischendruckwert auf seinen höheren Adsorptionsdruck wiederaufzudrücken, während gleichzeitig weniger leicht adsorbierbare Komponente von dem Produktende des Bettes als Produktgas abgegeben wird;
(b3) Zuführen von zusätzlichem Einsatzgas zu dem Einsatzende des Bettes bei dem höheren Adsorptionsdruck, während gleichzeitig weitere weniger leicht adsorbierbare Komponente von dem Produktende des Bettes als zusätzliches Produktgas abgegeben wird.

8. Verfahren nach Anspruch 1, bei dem das Adsorptionssystem zwei Adsorberbetten aufweist.

9. Verfahren nach Anspruch 3, bei dem das Adsorptionssystem drei Adsorberbetten aufweist.

10. Verfahren nach einem der vorhergehenden Ansprüche, bei dem das Einsatzgasgemisch Luft aufweist, die weniger leicht adsorbierbare Komponente Sauerstoff aufweist und die leichter adsorbierbare Komponente Stickstoff aufweist.

11. Verfahren nach einem der vorhergehenden Ansprüche, bei dem der Druckunterschied zwischen den Betten nach Abschluß des Teildruckausgleichs zwischen etwa 6,0 und 69 kPa (etwa 1 bis etwa 10 psi) liegt.

12. Verfahren nach Anspruch 11, bei welchem die Druckdifferenz zwischen etwa 14 und etwa 62 kPa (etwa 2 bis etwa 9 psi) liegt.

13. Verfahren nach Anspruch 12, bei welchem die Druckdifferenz zwischen etwa 21 und etwa 34 kPa (etwa 3 bis etwa 5 psi) liegt.

## Revendications

1. Procédé d'adsorption par oscillation de pression pour la séparation d'un mélange gazeux d'alimentation contenant un constituant moins aisément adsorbable et un constituant plus aisément adsorbable dans un système d'adsorption ayant au moins deux lits d'adsorbant capables d'adsorber sélectivement ledit constituant plus aisément adsorbable, chaque lit, sur une base cyclique, subissant une séquence de traitement qui consiste :
(a) à introduire un gaz dans l'extrémité à produit du lit après une désorption de celui-ci pour élever la pression du lit à partir de sa pression inférieure de désorption, plus basse que celle de l'atmosphère, jusqu'à un niveau intermédiaire inférieure de pression, ledit gaz ayant été libéré d'un autre lit dans le système initialement à une pression plus élevée ;
(b) à amener du gaz d'alimentation à l'extrémité d'alimentation du lit pour en élever la pression depuis ledit niveau intermédiaire inférieur de pression jusqu'à la pression plus élevée d'adsorption du lit, et à décharger le constituant moins aisément adsorbable, en tant que gaz produit, de l'extrémité à produit du lit ;
(c) à abaisser en écoulement co-courant la pression du lit depuis ladite pression d'adsorption plus élevée jusqu'à une pression intermédiaire par la libération d'un gaz d'espace vide depuis l'extrémité à produit du lit, ledit gaz libéré étant transmis à l'extrémité à produit d'un autre lit dans le système initialement à une pression plus basse, la pureté du gaz d'espace vide se dégradant dans le constituant moins aisément adsorbable jusqu'à la fin de ladite étape d'abaissement co-courant de la pression ;
(d) à abaisser par contre-courant la pression du lit avec une libération du constituant plus aisément adsorbable à partir de l'extrémité d'alimentation du lit, la pression du lit étant abaissée du niveau intermédiaire de pression jusqu'à ladite pression inférieure de désorption, plus basse que celle de l'atmosphère ; et
(e) à répéter les étapes (a)-(d) sur une base cyclique, du gaz additionnel d'alimentation étant amené au lit durant l'étape (b),
caractérisé en ce que, dans les étapes (a) et (c), ladite amenée du gaz est poursuivie pendant une période de temps telle que la pression entre lesdits lits s'équilibre partiellement, mais non totalement.

2. Procédé selon la revendication 1, dans lequel, durant l'étape (b), lorsque la pression du lit a été élevée depuis ledit niveau intermédiaire inférieur de pression jusqu'à la pression supérieure d'adsorption du lit, du gaz additionnel d'alimentation est amené à l'extrémité d'alimentation du lit à ladite pression plus élevée d'adsorption tandis qu'un constituant moins aisément adsorbable continue d'être déchargé de l'extrémité à produit du lit en tant que gaz produit.

3. Procédé selon la revendication 1 ou 2, consistant en outre à purger le lit à la suite de l'étape (d) pour éliminer les quantités additionnelles du constituant plus aisément adsorbable de son extrémité d'alimentation, par le passage d'une portion du constituant moins aisément adsorbable, libéré de l'extrémité à produit d'un lit dans le système, vers l'extrémité du produit dudit lit en tant que gaz de purge à ladite pression inférieure de désorption.

4. Procédé selon la revendication 1, dans lequel l'amenée du gaz d'alimentation à l'extrémité d'alimentation du lit dans l'étape (b) est effectuée en même temps que l'introduction de gaz dans l'extrémité à produit du lit dans l'étape (a).

5. Procédé selon la revendication 1, et consistant à décharger le constituant moins aisément adsorbable de l'extrémité à produit du lit en tant que gaz produit simultanément à l'addition de gaz d'alimentation à l'extrémité d'alimentation du lit, les débits d'addition, de décharge et d'adsorption dans le lit étant tels que la pression du lit peut s'élever jusqu'à ladite pression supérieure d'adsorption.

6. Procédé selon la revendication 1, dans lequel l'amenée du gaz d'alimentation à l'extrémité d'alimentation du lit dans l'étape (b) est exécutée sans que le constituant moins aisément adsorbable soit déchargé de l'extrémité à produit du lit durant ladite remise en pression, et comprenant, avant l'étape (c), l'amenée de gaz additionnel d'alimentation à l'extrémité d'alimentation du lit à la pression supérieure d'adsorption, et la décharge du constituant moins aisément adsorbable depuis l'extrémité à produit du lit, en tant que gaz produit.

7. Procédé selon la revendication 1, dans lequel l'étape (b) consiste :
(b1) à amener du gaz d'alimentation à l'extrémité d'alimentation du lit pour en élever la pression depuis ledit niveau intermédiaire inférieur de pression jusqu'à un niveau intermédiaire supérieur de pression ;
(b2) à amener du gaz additionnel d'alimentation à l'extrémité d'alimentation du lit afin de remettre en pression le lit depuis ledit niveau intermédiaire supérieur de pression jusqu'à sa pression supérieure d'adsorption, tout en déchargeant simultanément le constituant moins aisément adsorbable de l'extrémité à produit du lit, en tant que gaz produit ;
(b3) à amener du gaz additionnel d'alimentation à l'extrémité d'alimentation du lit à des pressions supérieures d'adsorption, tout en déchargeant simultanément du constituant additionnel moins aisément adsorbable de l'extrémité à produit du lit en tant que gaz produit additionnel.

8. Procédé selon la revendication 1, dans lequel ledit système d'adsorption contient deux lits d'adsorbant.

9. Procédé selon la revendication 3, dans lequel ledit système d'adsorption comprend trois lits d'adsorbant.

10. Procédé selon l'une quelconque des revendications précédentes, dans lequel le mélange gazeux d'alimentation comprend de l'air, le constituant moins aisément adsorbable comprend de l'oxygène et ledit constituant plus aisément adsorbable comprend de l'azote.

11. Procédé selon l'une quelconque des revendications précédentes, dans lequel la différence de pression entre lesdits lits à la fin dudit équilibrage partiel de la pression est comprise entre 6,0 et 69 kPa (environ 1 et environ 10 psi).

12. Procédé selon la revendication 11, dans lequel ladite différence de pression est comprise entre environ 14 et environ 62 kPa (environ 2 et environ 9 psi).

13. Procédé selon la revendication 12, dans lequel ladite différence de pression est comprise entre environ 21 et environ 34 kPa (environ 3 et environ 5 psi).
